# EUROPÄISCHE PATENTSCHRIFT

(11) **EP 1 667 879 B1**
(45) Veröffentlichungstag und Bekanntmachung des Hinweises auf die Patenterteilung: **02.05.2007**
(21) Anmeldenummer: 04764726.8
(22) Anmeldetag: 02.09.2004
(51) Int. Cl.: B60R 22/34

(54) **SELBSTSPERRENDER GURTAUFROLLER**
SELF-LOCKING BELT RETRACTOR
ENROULEUR DE CEINTURE A BLOCAGE AUTOMATIQUE

(30) Priorität: 25.09.2003 DE 10344435
(43) Veröffentlichungstag der Anmeldung: 14.06.2006
(73) Patentinhaber: AUTOLIV DEVELOPMENT AB, 447 83 Vargarda (SE)
(72) Erfinder: JABUSCH, Ronald, 25336 Elmshorn (DE); HEINE, Volkmar, 22589 Hamburg (DE)
(74) Vertreter: Müller, Karl-Ernst
(86) Internationale Anmeldenummer: PCT/EP2004/009767
(87) Internationale Veröffentlichungsnummer: WO 2005/037617

(56) Entgegenhaltungen:
- DE-C- 19 681 341
- US-A1- 2002 023 981
- US-A1- 2002 092 943

## Beschreibung

Die Erfindung betrifft einen selbstsperrenden Gurtaufroller mit einer fahrzeugsensitiv und/oder gurtbandsensitiv ansteuerbaren Blockiervorrichtung für die Gurtwelle, mit einem Profilkopf als Träger eines zur Verriegelung der Gurtwelle mit dem Gehäuse beweglich angeordneten Sperrgliedes und mit einer Kraftbegrenzungseinrichtung in Form eines an seinem einen Ende drehfest mit der Gurtwelle und an seinem anderen Ende drehfest mit dem Profilkopf verbundenen Torsionsstabes.

Ein Gurtaufroller mit den vorgenannten Merkmalen ist in der DE 196 81 341 C1 beschrieben. Soweit es erforderlich ist, die Gurtwelle und den Profilkopf bei normalen Auf- und Abwickelbewegungen wie auch bei normalen Gurtblockierungen aneinanderzukoppeln, sind an der dem Profilkopf zugewandten Stirnseite der Gurtwelle zwei Scherstifte angeordnet, die in entsprechende Bohrungen im Profilkopf eingreifen und bei der Montage des Gurtaufrollers mit dem Profilkopf vernietet werden, so daß Gurtwelle und Profilkopf während der weiteren Montagevorgänge als Baugruppe zusammengehalten sind. Kommt es nach einer über das gurtbandsensitive bzw. fahrzeugsensitive Steuersystem eingeleiteten Blockierung der Gurtwelle beispielsweise durch den bei einem Unfall in den Gurt fallenden Insassen zu einer entsprechend großen Zugkraft am Gurt in Gurtauszugsrichtung, so brechen die Scherstifte ab, und die Gurtwelle ist danach gegenüber dem blockierten Profilkopf in Gurtauszugsrichtung relativ drehbar. Diese Relativdrehung wird durch den zwischen Gurtwelle und Profilkopf eingeschalteten Torsionsstab aufgenommen, wobei aufgrund der Formänderungsarbeit des Torsionsstabes die gewünschte Kraftbegrenzung erreicht wird.

Mit dem bekannten Gurtaufroller ist der Nachteil verbunden, daß die Herstellung der Scherstiftverbindung aufwendig ist, weil die in die Ausnehmungen des Profilkopfs eingreifenden Scherstifte mit diesem vernietet werden, wobei an die Passgenauigkeit der Verbindung entsprechend hohe Anforderungen zu stellen sind. Die sich durch das Abscheren der Scherstifte unmittelbar vor dem Wirksamwerden der Kraftbegrenzung einstellende Kraftspitze ist schwierig zu definieren bzw. einzustellen, und schließlich können nach dem Abscheren der Scherstifte axiale Kräfte nicht mehr übertragen werden, wobei sich der Torsionsstab bei seiner Verdrillung aufgrund plastischer Verformung in der Axialrichtung längt und dabei in unerwünschter und nachteiliger Weise Gurtwelle und Profilkopf axial auseinandertreibt.

Der Erfindung liegt daher die Aufgabe zugrunde, bei einem selbstsperrenden Gurtaufroller der eingangs genannten Art die Verbindung zwischen Gurtwelle und Profilkopf in Bezug auf Herstellung und Funktion zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Ein selbstsperrender Gurtaufroller gemäß dem Oberbegriff des Anspruchs 1 ist aus der US 2002/092943 A1 bekannt.

Die Erfindung sieht in ihrem Grundgedanken vor-nachdem wenigstens ein an dem einen der miteinander verbundenen Bauteile angeordneter, axial abstehender Ansatz in wenigstens eine stirnseitig an dem anderen Bauteil eingebrachte Ausnehmung eingreift-, daß in dem zwischen Ansatz und der Innenwandung der Ausnehmung gebildeten Ringraum ein sich zwischen dem Ansatz und der Innenwandung der Ausnehmung verklemmender Klemmring angeordnet ist.

Mit der Erfindung ist der Vorteil verbunden, daß bei der Montage von Gurtwelle und Profilkopf zu der gewünschten Baugruppe lediglich ein Zusammenstecken von Gurtwelle, Klemmring und Profilkopf erforderlich ist, wobei durch das Zusammenstecken die Verklemmung von Gurtwelle und Profilkopf stattfindet und die anschließend übertragbare Axialkraft wesentlich größer ist als die bei der Montage aufzubringende Fügekraft. Die Verbindung von Gurtwelle und Profilkopf findet dabei im wesentlichen schon über den Torsionsstab statt. Das Vorsehen des Klemmringes führt aber auch dazu, daß die bei der Ankopplung von Gurtwelle und Profilkopf über die zum Stand der Technik beschriebenen Scherstifte entstehende Kraftspitze entfällt und das Kraftbegrenzungssystem weicher anspricht, wobei durch den Klemmring auch bei der Kraftbegrenzung ggf. ein zusätzliches Kraftbegrenzungsniveau erzeugt wird. Ein weiterer Vorteil der Erfindung besteht darin, daß die Verbindung über den Klemmring auch während der Kraftbegrenzung noch Axialkräfte überträgt, so daß eine Längung des Torsionsstabes die beschriebene nachteilige Konsequenz nicht mehr hat.

Nach einem Ausführungsbeispiel der Erfindung ist vorgesehen, daß der Klemmring auf den Ansatz aufschiebbar und der Außendurchmesser des Klemmringes größer ist als der Innendurchmesser der Ausnehmung.

Zur Erleichterung der Montage kann nach einem Ausführungsbeispiel der Erfindung vorgesehen sein, dass der Ansatz stirnseitig mit einem Absatz zur Aufnahme des Klemmringes versehen ist. Hierdurch ist einerseits der Klemmring auf den Ansatz des Profilkopfes vorfixiert, so daß die insoweit vormontierte Baueinheit bei der Fertigmontage des Gurtaufrollers besser handhabbar ist, andererseits kann der beim Einschieben des Klemmringes in die zugehörige Ausnehmung der Klemmring nicht ausweichen, sonder bleibt lagefixiert.

Alternativ kann vorgesehen sein, daß der Klemmring in die Ausnehmung einlegbar und der Innendurchmesser des Klemmringes kleiner ist als der Durchmesser des Ansatzes.

Soweit nach einem Ausführungsbeispiel der Erfindung vorgesehen ist, daß der Klemmring als flache Scheibe ausgebildet ist, kann nach Ausführungsbeispielen der Erfindung weiterhin vorgesehen sein, daß der Klemmring als geschlossener Ring oder alternativ als ein eine Lücke aufweisender offener Ring ausgebildet ist.

Zweckmäßig ist auch nach einem Ausführungsbeispiel der Erfindung die Ausbildung des Klemmringes mit einer Spiralform, weil diese Spiralform den Vorteil hat, daß aufgrund der Relativdrehung von Gurtwelle und Profilkopf während der Kraftbegrenzung der Klemmring ähnlich einem Gewinde eine Rückstellkraft erzeugen kann und damit der angesprochenen Axialverschiebung von Gurtwelle zu Profilkopf entgegenwirkt.

In der Zeichnung sind Ausführungsbeispiele der Erfindung wiedergegeben, welche nachstehend beschrieben sind.

Es zeigen:
- Fig. 1.: eine aus Gurtwelle und Profilkopf bestehende Baugruppe als Bestandteil eines selbstsperrenden Gurtaufrollers in einer Gesamtdarstellung,
- Fig. 2: in einer schematischen ausschnittsweisen Darstellung die Bauteile beim Zusammenfügen,
- Fig. 3: den Gegenstand der Figur 2 bei einer Axialbeanspruchung,
- Fig. 3a: den Gegenstand der Figur 2 bzw. Figur 3 in einer anderer Ausführungsform vor dem Zusammenfügen,
- Fig. 4: einen Klemmring in einer Einzeldarstellung,
- Fig. 5: den Klemmring gemäß Figur 4 in einer anderen Ausführungsform,
- Fig. 6: den Gegenstand der Figur 2 mit einem weiterhin abgewandelten Klemmring.

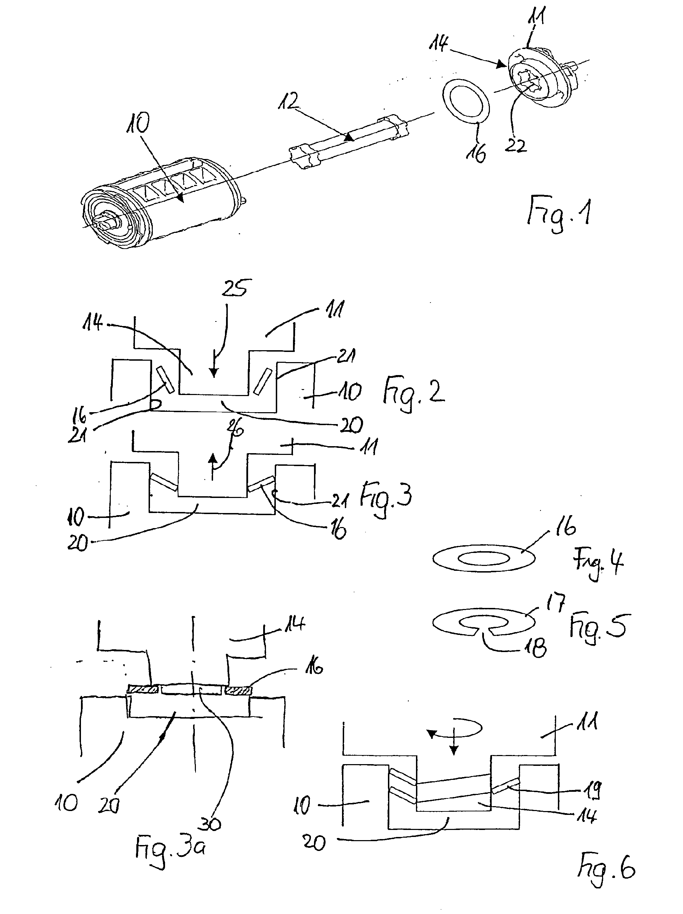

Soweit Gegenstand der Erfindung ein selbstsperrender Gurtaufroller ist, findet sich eine Gesamtdarstellung des Gegenstandes in der zur Bildung der Gattung herangezogenen DE 196 81 341 C1. Soweit zum Verständnis der vorliegenden Erfindung lediglich die aus Gurtwelle und Profilkopf bestehende Baugruppe erforderlich ist, ist in Fig. 1 mit 10 die Gurtwelle und mit 11 ein an die Gurtwelle zu koppelnder Profilkopf bezeichnet. Gurtwelle 10 und Profilkopf 11 sind über einen Torsionsstab 12 aneinandergekoppelt, wobei der Torsionsstab 12 mit seinem in Figur 1 linken Ende drehfest mit der Gurtwelle 10 und mit seinem in Figur 1 rechten Ende drehfest mit dem Profilkopf 11 verbunden ist, wozu der Profilkopf 11 eine dem Ende des Torsionsstabes 12 formentsprechende Aufnahmeöffnung 22 aufweist. Der Profilkopf 11 reicht mit einem von ihm ausgehenden und die Aufnahmeöffnung 22 ausbildenden axialen Ansatz 14 in eine stirnseitig in der Gurtwelle 10 ausgebildete Ausnehmung 20 (Fig. 2) hinein. Das Zusammenfügen von Gurtwelle 10 und Profilkopf 11 geschieht unter Einfügen eines Klemmringes 16, wie nachstehend noch weiter erläutert wird.

Die Festlegung des Ansatzes 14 des Profilkopfes 11 in der zugehörigen Ausnehmung 20 der Gurtwelle 10 ist in den Figuren 2, 3 und 6 dargestellt, indem in dem zwischen Ansatz 14 und der Innenwandung 21 der Ausnehmung 20 gebildeten Ringraum ein Klemmring 16 eingesetzt ist. In den Figuren 2 und 3 ist lediglich schematisch dargestellt, wie sich bei der Montage in der Einsteckrichtung (Pfeil 25) der Klemmring 16 verhält, und wie bei in der entgegengesetzten Zugrichtung (Pfeil 26) sich der Klemmring 16 aufstellt und sich dabei zwischen Ansatz 14 und Innenwandung 21 der Ausnehmung 20 verklemmt und ein Herausrutschen des Ansatzes 14 des Profilkopfes 11 aus der Ausnehmung 20 der Gurtwelle 10 verhindert. Eine derartige Beanspruchung in Zugrichtung (Pfeil 26) kann beispielsweise während der Handhabung der aus Gurtwelle 10 und Profilkopf 11 bestehenden Baugruppe während weiterer Montageschritte des Gurtaufrollers oder auch während der Kraftbegrenzung eintreten. In Figur 3a ist eine Ausführungsform dargestellt, bei welcher der Ansatz 14 des Profilkopfes 11 zusätzlich mit einem stirnseitigen Absatz 30 versehen ist, auf den der Klemmring 16 aufgesetzt ist. Hierdurch ist der Klemmring 16 an dem Ansatz 14 für die Fertigmontage des Gurtaufroller vorfixiert.

Wie sich aus den Figuren 4 und 5 ergibt, kann der Klemmring als geschlossener Klemmring 16 in Form einer flachen Scheibe ausgebildet sein oder aber - wiederum als flache Scheibe - als ein eine Lücke 18 aufweisender, offener Klemmring 17.

Wie sich schließlich aus Figur 6 ergibt, kann ein Klemmring 19 in einer weiteren Ausführungsform eine Spiralform aufweisen, so daß während der bei der Kraftbegrenzung eintretenden Relativdrehung von Gurtwelle 10 und Profilkopf 11 zueinander der Klemmring ähnlich einem Gewinde eine Rückstellkraft in axialer Richtung erzeugt.

Statt der beim Ausführungsbeispiel dargestellten Ausbildung könnte alternativ auch ein an der Stirnseite der Gurtwelle 10 angeordneter, umlaufender Absatz ausgebildet sein, der in eine entsprechende ringförmige Ausnehmung des Profikopfes 11 eingreift.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller mit einer fahrzeugsensitiv und/oder gurtbandsensitiv ansteuerbaren Blockiervorrichtung für die Gurtwelle (10), mit einem Profilkopf (11) als Träger eines zur Verriegelung der Gurtwelle (10) mit dem Gehäuse beweglich angeordneten Sperrgliedes und mit einer Kraftbegrenzungseinrichtung in Form eines an seinem einen Ende drehfest mit der Gurtwelle (10) und an seinem anderen Ende drehfest mit dem Profilkopf (11) verbundenen Torsionsstabes (12), wobei wenigstens ein an dem einen der miteinander verbundenen Bauteile (10, 11) angeordneter, axial abstehender Ansatz (14) in wenigstens eine stirnseitig an dem anderen Bauteil (10, 11) eingebrachte Ausnehmung (20) eingreift, **dadurch gekennzeichnet, daß** in dem zwischen Ansatz (14) und der Innenwandung (21) der Ausnehmung (20) gebildeten Ringraum ein sich zwischen dem Ansatz (14) und der Innenwandung (21) der Ausnehmung (20) verklemmender Klemmring (16, 17, 19) angeordnet ist.

2. Gurtaufroller nach Anspruch 1, **dadurch gekennzeichnet, daß** der Klemmring (16, 17, 19) auf den Ansatz (14) aufschiebbar und der Außendurchmesser des Klemmringes größer ist als der Innendurchmesser der Ausnehmung (20).

3. Gurtaufroller nach Anspruch 2, **dadurch gekennzeichnet, daß** der Ansatz (14) stirnseitig mit einem Absatz (30) zur Aufnahme des Klemmringes (16, 17, 19) versehen ist.

4. Gurtaufroller nach Anspruch 1, **dadurch gekennzeichnet, daß** der Klemmring (16, 17, 19) in die Ausnehmung (20) einlegbar und der Innendurchmesser des Klemmringes kleiner ist als der Durchmesser des Ansatzes (14).

5. Gurtaufroller nach einem der Ansprüche 1 bis 4, **dadurch gekennzeichnet, daß** der Klemmring (16, 17) als flache Scheibe ausgebildet ist.

6. Gurtaufroller nach einem der Ansprüche 1 bis 5, **dadurch gekennzeichnet, daß** der Klemmring als geschlossener Ring (16) ausgebildet ist.

7. Gurtaufroller nach einem der Ansprüche 1 bis 5, **dadurch gekennzeichnet, daß** der Klemmring als eine Lücke (18) aufweisender offener Ring (17) ausgebildet ist.

8. Gurtaufroller nach einem der Ansprüche 1 bis 5, **dadurch gekennzeichnet, daß** der Klemmring (19) eine Spiralform aufweist.

## Claims

1. Self-locking belt roller with a vehicle-sensitive and/or seatbelt-sensitive controllable blocking device for the belt shaft (10), with a profile head (11) as carrier of a locking element arranged so as to be movable for locking of the belt shaft (10) with the housing and with a force limiting device in the form of a torsion bar (12) which is connected at its one end in torque proof manner with the belt shaft (10) and at its other end connected in torque proof manner with the profile head (11), whereby at least one axially extending projection (14) located at one of the components (10.11) connected with each other engages in at least one recess (20) formed on the front side on the other component (10, 11) **characterized in that** a clamping ring (16, 17, 18) is located in the annular space formed between projection (14) and the inner walls (21) of recess (20) that is clamping between the projection (14) and the inner walls (21) of recess (20).

2. Belt roller according to Claim 1, **characterised in that** the clamping ring (16, 17, 19) can be pushed onto the projection (14) and the outer diameter of the clamping ring is larger than the internal diameter of recess (20).

3. Belt roller according to Claim 2, **characterised in that** the projection (14) is provided on the front side with a step (30) for accommodation of the clamping ring (16, 17, 19).

4. Belt roller according to Claim 1, **characterised in that** the clamping ring (16, 17, 19) can be laid in recess (20) and the internal diameter of the clamping ring is smaller than the diameter of projection (14),

5. Belt roller according to any of Claims 1 to 4, **characterised in that** the clamping ring (16, 17) is in the form of a flat disc.

6. Belt roller according to any of Claims 1 to 5, **characterised in that** the clamping ring is formed as a closed ring (16).

7. Belt roller according to any of Claims 1 to 5, **characterised in that** the clamping ring is in the form of an open ring (17) exhibiting a gap (18).

8. Belt roller according to any of Claims 1 to 5, **characterised in that** the clamping ring (19) exhibits a spiral form.

## Revendications

1. Enrouleur de ceinture de sécurité autobloquant comportant un dispositif de blocage pour l'arbre d'enroulement de la ceinture (10), apte à être actionné de manière sensible au véhicule et/ou de manière sensible à la sangle, comportant une tête profilée (11) sous forme de support d'un organe de blocage, disposé de manière mobile pour le verrouillage de l'arbre d'enroulement de la ceinture (10) avec le boîtier, et comportant un dispositif de limitation des forces sous la forme d'une barre de torsion (12), dont une extrémité est assemblée solidaire en rotation avec l'arbre d'enroulement de la ceinture (10) et dont l'autre extrémité est assemblée solidaire en rotation avec la tête profilée (11), sachant qu'au moins une saillie (14), orientée dans le sens axial et agencée sur l'une des pièces (10, 11) reliées l'une à l'autre, s'engage dans au moins un évidement (20), ménagé du côté frontal sur l'autre pièce (10, 11), **caractérisé en ce que** dans l'espace annulaire, formé entre la saillie (14) et la paroi intérieure (21) de l'évidement (20), est disposée une bague de serrage (16, 17, 19), qui se bloque entre la saillie (14) et la paroi intérieure (21) de l'évidement (20).

2. Enrouleur de ceinture de sécurité selon la revendication 1, **caractérisé en ce que** la bague de serrage (16, 17, 19) peut être enfichée sur la saillie (14) et le diamètre extérieur de la bague de serrage est supérieur au diamètre intérieur de l'évidement (20).

3. Enrouleur de ceinture de sécurité selon la revendication 2, **caractérisé en ce que** la saillie (14) est munie du côté frontal d'un talon (30) destiné à recevoir la bague de serrage (16, 17, 19).

4. Enrouleur de ceinture de sécurité selon la revendication 1, **caractérisé en ce que** la bague de serrage (16, 17, 19) peut être insérée dans l'évidement (20) et le diamètre intérieur de la bague de serrage est inférieur au diamètre de la saillie (14).

5. Enrouleur de ceinture de sécurité selon l'une quelconque des revendications 1 à 4, **caractérisé en ce que** la bague de serrage (16, 17) est réalisée sous la forme d'un disque plat.

6. Enrouleur de ceinture de sécurité selon l'une quelconque des revendications 1 à 5, **caractérisé en ce que** la bague de serrage est réalisée sous la forme d'une bague fermée (16).

7. Enrouleur de ceinture de sécurité selon l'une quelconque des revendications 1 à 5, **caractérisé en ce que** la bague de serrage est réalisée sous la forme d'une bague ouverte (17) comportant une fente (18).

8. Enrouleur de ceinture de sécurité selon l'une quelconque des revendications 1 à 5, **caractérisé en ce que** la bague de serrage (19) a la forme d'une spirale.
